# EUROPEAN PATENT SPECIFICATION

(11) **EP 2 128 240 B1**
(45) Date of publication and mention of the grant of the patent: **07.02.2018**
(21) Application number: 08721220.5
(22) Date of filing: 04.03.2008
(51) Int. Cl.: C12G 3/06, A23B 7/10

(54) **TOMATO JUICE-CONTAINING ALCOHOLIC BEVERAGE AND METHOD FOR PRODUCING THE SAME**
TOMATENSAFT ENTHALTENDES ALKOHOLISCHES GETRÄNK UND HERSTELLUNGSVERFAHREN DAFÜR
BOISSON ALCOOLISÉE CONTENANT DU JUS DE TOMATE ET SON PROCÉDÉ DE FABRICATION

(30) Priority: 05.03.2007 JP 2007054922
(43) Date of publication of application: 02.12.2009
(73) Proprietor: Suntory Holdings Limited, Kita-ku, Osaka-shi, Osaka 530-8203 (JP)
(72) Inventor: HATANAKA, Tatsuya, Fuchu-shi Tokyo 183-0014 (JP); NAKAMURA, Shigeyuki, Kawasaki-shi Kanagawa 213-0001 (JP); ISHIGAKI, Kenichi, Kawasaki-shi Kanagawa 211-0042 (JP); MATSUMOTO, Takehiro, Tama-shi Tokyo 206-0022 (JP)
(74) Representative: Vossius & Partner Patentanwälte Rechtsanwälte mbB
(86) International application number: PCT/JP2008/053800
(87) International publication number: WO 2008/108347

(56) References cited:
- JP-A- H1 175 787
- JP-A- H1 175 788
- JP-A- S6 291 175
- JP-A- 62 282 576
- JP-A- H01 304 875
- JP-A- H08 113 723
- JP-A- H08 173 135
- JP-A- H08 280 364
- JP-A- H10 276 707
- JP-A- S62 143 678
- JP-A- S62 253 368
- JP-A- S62 282 576
- JP-A- S63 267 242
- JP-A- 2001 299 323
- JP-A- 2003 135 038
- JP-A- 2005 176 727
- JP-A- 2006 067 895
- JP-A- 2006 141 260
- JP-B1- S3 925 628
- UA-C2- 75 672
- DATABASE WPI Week 200723 Thomson Scientific, London, GB; AN 2007-226672 XP002617949, & JP 2007 037530 A (HASEGAWA CO LTD) 15 February 2007 (2007-02-15)
- DATABASE FSTA [Online] INTERNATIONAL FOOD INFORMATION SERVICE (IFIS), FRANkFURT-MAIN, DE; 2004, KOHAJDOVA Z ET AL: "Fermentation of tomato juices.", XP002617917, Database accession no. FS-2005-09-Hq2108
- DATABASE WPI Week 200036 Thomson Scientific, London, GB; AN 2000-415554 XP002617950, & JP 2000 139441 A (WAKI I) 23 May 2000 (2000-05-23)
- TOMOMI KAWANO SAKE SHIN. SHOKUHIN JITEN 12 20 July 1992, page 278
- 'Tomato no Osake Tomatoma' SUNTORY NEWS RELEASE NO.9721, [Online] 06 March 2007, XP008113878 Retrieved from the Internet: <URL:http://www.suntory.co.jp/news/2007/972 1.html> [retrieved on 2008-04-03]
- 'Shiro Wine Base Tomato no Kajitsushu Suntory' NIKKAN KOGYO SHINBUN 07 March 2007, page 13

## Description

### TECHNICAL FIELD

The present invention relates to a method of preparing a tomato juice-containing alcoholic drink. More specifically, it relates to a method of preparing a tomato juice-containing alcoholic drink which has improved flavor qualities and shows regulated sedimentation and color change.

### BACKGROUND ART

Among vegetables, tomato is especially popular and has been taken at increasing frequencies in recent years. Under these circumstances, consumers' tastes have been diversified and there arises an increasing demand for new deliciousness using tomato such as an alcohol drink using tomato. As some consumers' comment "I love tomato but not tomato juice" indicates, it is sometimes observed that the deliciousness of tomato is impaired during processing and its unfavorable and grassy smell becomes more noticeable. Moreover, it has been known that alcoholic drinks containing tomato juice suffer from some problems such as a change in taste, sedimentation (formation of lees), tendency to fading and so on.

To overcome these problems, Patent Document 1 discloses a method of producing a clear tomato beverage which comprises microfiltration or ultrafiltration followed by a decoloring treatment. Patent Document 2 discloses a beverage containing tomato juice in which grassy smell (hexanal smell) is reduced by adding polyphenols. Patent Document 3 discloses a method for producing a fermented tomato beverage which comprises adding a wine yeast to a mixture containing a tomato raw material containing pulp matters, thus fermenting the mixture and then removing the yeast and the pulp matters. Patent Document 4 discloses a method of stabilizing lycopene, which is a dye contained in tomato, in a solution. Further, treatments of tomato juice using a lactic acid bacterium, in particular, lactic acid fermentation focusing on the production of GABA (γ-aminobutyric acid) are disclosed (Patent Documents 5 and 6).
Patent Document 1: JP-A-2003-135038
Patent Document 2: JP-A-2006-141260
Patent Document 3: JP-A-2005-176727
Patent Document 4: JP-A-H08-113723
Patent Document 5: JP-A-2000-210075
Patent Document 6: JP-A-2000-308457

### DISCLOSURE OF THE INVENTION

### PROBLEMS TO BE SOLVED BY THE INVENTION

However, there is still a great demand for tomato juice-containing alcoholic drinks which have improved flavor qualities, show regulated color change and have a high dispersion stability (i.e., being free from sedimentation). The present inventors have found that an increase in the content of tomato juice for imparting tomato flavor would cause an increase in pH which, in its turn, facilitates the growth of bacteria after opening, and when the alcohol content is increased to prevent the growth of bacteria, the obtained drink shows only little noticeable tomato flavor. Under these circumstances, an object of the present invention is to provide a method of preparing a tomato juice-containing alcoholic drink, which fully sustains the fresh tomato flavor immediately after biting into a tomato but is free from the undesirable grassy smell inherent to tomato juice, and shows well-balanced alcoholic image and umami of tomato together with well-balanced sourness and sweetness.
Another object of the present invention is to provide a method of preparing the above-described drink with a high commercial value which sustains the vivid red color of tomato even in the presence of alcohol and is free from sedimentation even in the case of adding a tomato juice in a large amount.

### MEANS FOR SOLVING THE PROBLEMS

As the results of intensive studies for improving the flavor qualities of a tomato juice-containing alcoholic drink, the present inventors have found that, by using not a tomato juice as such but a mixture of a lactic-fermented tomato liquid, which is obtained by fermenting with the use of a lactic acid bacterium, with a clear tomato juice, which is obtained by filtration optionally preceded by an enzymatic treatment, the grassy smell characteristic to tomato juice can be removed without impairing the favorable tomato flavor even in an alcoholic drink. The inventors have further studied on the blending ratio of the lactic-fermented tomato liquid and the clear tomato juice as described above, thereby completing the present invention.
The present invention relates to a method of preparing a tomato juice-containing alcoholic drink,
which contains
(A) a lactic-fermented tomato liquid and
(B) a clear tomato juice, and
has a tomato juice content of 1 %(w/w) or more and an alcohol content of 1 to 25% and wherein the method comprises mixing (A) the lactic-fermented tomato liquid and (B) the clear tomato juice, wherein the weight ratio is (A):(B)=1:3 to 3:1 in the state of being reconstituted to give the same sugar content, which means the content of each raw material (A) and (B) is converted into the amount at which a definite sugar content is obtained.

The resultant tomato juice-containing alcoholic drink contains (A) a lactic-fermented tomato liquid %(w/w) or more and (B) a clear tomato juice, and has a tomato juice content of 1 %(w/w) or more, preferably 10 or more, more preferably 30 %(w/w) or more %(w/w) or more and still more preferably 50 %(w/w) or more, and an alcohol content of 1 to 25%, preferably 4 to 18% and more preferably 8 to 14%.

The tomato juice-containing alcoholic drink as described above contains (A) a lactic-fermented tomato liquid and (B) a clear tomato juice at a weight ratio (A):(B)=1:50 to 50:1 (reference), alternatively 1:10 to 10:1 (reference) or according to the invention (A)(B) is 1:3 to 3:1, preferably 1:2 to 2:1 and particularly 1:1, in the case of being reconstituted to give the same sugar content.

Further the tomato juice-containing alcoholic drink is preferably characterized by having a lactic acid content of 0.005 g/L or more, more preferably 0.05 g/L or more, even more preferably 0.1 g/L or more and still more preferably 0.25 g/L or more.

Further, the tomato juice-containing alcoholic drink preferably has a lactic acid content of 0.005 g/L or more, more preferably 0.05 g/L or more, even more preferably 0.1 g/L or more %(w/w) or more and still more preferably 0.25 g/L or more, and preferably contains (A) a lactic-fermented tomato liquid, characterized in that the lactic-fermented tomato liquid (A) has a malic acid content of 1.5 g/L or less, more preferably 1.0 g/L or less, even more preferably 0.5 g/L or less and still more preferably 0.1 g/L or less.

Further, the tomato juice-containing alcoholic drink as described above contains stabilized lycopene.

Furthermore, disclosed herein is a method of the production of a tomato juice-containing alcoholic drink having a tomato juice content of 1 %(w/w) or more, preferably 10 %(w/w) or more, more preferably 30 %(w/w) or more and still more preferably 50 %(w/w) or more, and an alcohol content of 4 to 18% and preferably 8 to 14%, which comprises the following steps (a) to (c):
(a) a step of producing a lactic-fermented tomato liquid which comprises fermenting a tomato juice-containing liquid by using a lactic acid bacterium and thus increasing lactic acid in the liquid preferably to 0.1 g/L or more, more preferably 0.5 g/L or more, still preferably 1.0 g/L or more and still more preferably 1.5 g/L or more;
(b) a step of producing a clear tomato juice which comprises enzymatically treating a tomato juice and filtering the same; and
(c) a step of mixing the lactic-fermented tomato liquid as described above, the clear tomato juice as described above and an alcohol; optionally followed, if desired, by the following step (d);
(d) a step of adding stabilized lycopene.
In this method according to the invention a weight ratio (A):(B)=1:3 to 3:1 in the state of being reconstituted to give the same sugar content, which means the content of each raw material (A) and (B) is converted into the amount at which a definite sugar content is obtained.

Further, in the method of the production of a tomato juice-containing alcoholic drink as described above, step (a) preferably further comprises fermenting a tomato juice-containing liquid by using a lactic acid bacterium and thus decreasing malic acid in the liquid, i.e., decreasing preferably by 50% or more, more preferably by 90% or more and still more preferably by 93% or more; the enzymatic treatment in step (b) is a pectinase treatment; and the alcohol in step (c) comprises a white wine and/or a neutral spirit.

Further, disclosed herein is a tomato juice-containing alcoholic drink which is obtained by a production method as described above.

Furthermore, the tomato juice-containing alcoholic drink as described above preferably has a sugar content of 0 to 30%, more preferably 3 to 20% and even more preferably 10 to 14%.

Furthermore, the tomato juice-containing alcoholic drink as described above preferably has an acidity in terms of citric acid of 0 to 2.5%, more preferably 0.2 to 2.0% and even more preferably 0.7 to 1.1%.

Furthermore, in the tomato juice-containing alcoholic drink as describe above preferably dimethyl sulfide and/or furfural in the lactic-fermented tomato liquid (A) as described above are decreased compared with the tomato juice.

Furthermore, in the tomato juice-containing alcoholic drink as described above the clear tomato juice as described above has preferably been clarified by preventing the formation of sediments by an enzymatic treatment, centrifugation and/or filtration and so on. Furthermore, in the tomato juice-containing alcoholic drink as described above the clear tomato juice (B) as described above preferably has a turbidity of 10,000 Helm or less, more preferably 1,000 Helm or less, even more preferably 500 Helm or less and still more preferably 200 Helm or less.

Furthermore, in the tomato juice-containing alcoholic drink as described above the lactic-fermented tomato liquid preferably has a lactic acid content of 0.1 g/L or more, more preferably 0.5 g/L or more, even more preferably 1.0 g/L or more and still more preferably 1.5 g/L or more.

Furthermore, the tomato juice-containing alcoholic drink as described above is preferably a tomato juice-containing alcoholic drink having a lactic acid content of 0.005 g/L or more, more preferably 0.05 g/L or more, even more preferably 0.1 g/ or more and still more preferably 0.25 g/L or more, in which the lactic-fermented tomato liquid (A) as described above preferably has a malic acid content of 1.5 g/L or less, more preferably 1.0 g/L or less, even more preferably 0.5 g/L or less and still more preferably 0.1 g/L or less.

Furthermore, the tomato juice-containing alcoholic drink as described above is preferably a packaged drink.

Furthermore, in the method of producing a tomato juice-containing alcoholic drink as described above the lactic acid bacterium in step (a) is preferably one belonging to the genus *Lactobacillus.*

As the tomato to be used in the present invention, tomatoes of any varieties, which are commonly used in producing processed tomato products such as tomato juices, tomato purees, tomato pastes and so on, may be used without particular restriction. Either tomatoes of one variety or a combination of two or more varieties may be used. Examples of typical varieties include San Marzano, Rome, *Shugyoku, Kurikoma* and *Furikoma* to be used for processing, and First, *Momotaro, Fukuju, Sekai-ichi, Toyotama, Kurihara, Sakae, Gungyoku, Ichihara-Wase,* Comet, Prince of Wales, Mini-Tomato and so on to be eaten fresh. These tomatoes may be used either as such or after freezing, grinding or drying. Furthermore, they can be stored for a definite period of time before using.

"Tomato juice" as used herein means a product produced by harvesting tomatoes, heating if desired, grinding the same in a juicer or the like to give a tomato puree, and then centrifuging the tomato puree to thereby remove solid matters such as skin and seeds. A clear tomato juice as will be described hereinafter is also included within this scope. However, a lactic-fermented tomato liquid as will be described hereinafter is excluded from this scope of tomato juice herein. Taking the merits in transportation fee, improvement in microbial stability (i.e., lowering moisture activity), easiness in thawing procedures and so on into consideration, the tomato juice as described above may be a concentrated one.

"Lactic-fermented tomato liquid" as used herein means a product which is obtained through a step of fermenting pressed tomatoes as described above (preferably tomato juice) using a lactic acid bacterium and which is free from by-products unsuitable for edible purposes. Compared with tomato juice, such a lactic-fermented tomato liquid has a smaller amount of components causative of the grassy smell of tomato juice. Moreover, it may contain a by-product formed in the course of the fermentation. By using this lactic-fermented tomato liquid, the grassy smell of tomato juice and unpleasant smells generated by heat sterilization or the like in the production process can be reduced and deliciousness, in particular, umami is imparted. Thus, a drink having improved mildness owing to acid conversion can be obtained.

The lactic-fermented tomato liquid is not particularly restricted so long as it has the characteristics as described above. From the viewpoint of obtaining a drink having richness and mildness imparted thereto and showing desirable flavor, a lactic-fermented tomato liquid which has a smaller amount of components causative of the grassy smell of tomato juice, i.e., dimethyl sulfide and furfural, has a lactic acid content of 0.1 g/L or more, preferably 0.5 g/L or more, more preferably 1.0 g/L or more and still more preferably 1.5 g/L or more is preferred. Also, a lactic-fermented tomato liquid in which rose-like or floral aroma components have been formed or increased compared with tomato juice, and a lactic-fermented tomato liquid containing an increased amount of succinic acid are preferable. Since malic acid content is usable as an indication of the appropriate completion of fermentation from the viewpoint of improving flavor, a lactic-fermented tomato liquid having a malic acid content of 1.5 g/L or less, preferably 1.0 g/L or less, more preferably 0.5 g/L or less and still more preferably 0.1 g/L or less is also preferred. These components can be measured by using methods that are well known by a person skilled in the art, for example, gas chromatography and liquid chromatography.

A lactic-fermented tomato liquid that is preferred in the method of the present invention can be obtained by a production method which comprises fermenting the above-described liquid containing tomato juice by using a lactic acid bacterium so as to increase the lactic acid content of the liquid preferably to 0.1 g/L or more, more preferably 0.5 g/L or more, still more preferably 1.0 g/L or more and still more preferably 1.5 g/L or more. Saccharides are decomposed by the fermentation and thus sourness components (lactic acid and so on) and umami components are formed. The above-described lactic acid bacterium is not particularly restricted so long as a desired lactic-fermented tomato liquid can be obtained thereby. For example, a bacterium belonging to the genus *Lactobacillus* such as *Lactobacillus brevis, Lactobacillus plantarum* or *Lactobacillus casei* can be used therefor. The fermentation can be carried out by a method that is well known by a person skilled in the art.

In the case where the acidity that is usually employed as an indication of the progress of fermentation shows only little change in the course of the production of the lactic-fermented tomato liquid, the extent of the progress of the fermentation can be understood based on an increase in lactic acid or a decrease in malic acid. For example, a point at which malic acid is reduced by 50% or more, preferably 90% or more and more preferably 93% or more, compared with the start point of the fermentation can be referred to as the endpoint of the fermentation.

Now, an example of the process for producing the lactic-fermented tomato liquid will be illustrated: blending (water and tomato juice optionally together with fermentation accelerators such as apple juice, yeast extract, an amino acid, a vitamin, a metal salt and so on) => sterilization => inoculation with starter => culture => centrifugation => sterilization => filling => cooling => shipment. By referring the contents of the present description, a person skilled in the art can make appropriate modifications to this process.

"Clear tomato juice" as used herein means a product obtained by subjecting a tomato juice as described above to a clarification treatment for preventing sedimentation. As the clarification treatment, procedures such as an enzymatic treatment, centrifugation and filtration can be carried out either singly or in combination. For example, a clear tomato juice having a turbidity of 200 Helm or less can be obtained by subjecting a tomato juice, which has a turbidity of about 40000 Helm before the clarification treatment, to the clarification treatment. By using such a clear tomato juice, a fresh tomato smell that cannot be obtained by using the lactic-fermented tomato liquid alone can be imparted and a tomato juice-containing alcoholic drink which has a high alcohol content and yet shows regulated sedimentation and changes in color and taste and remains stable even after heat sterilization can be obtained.

The enzymatic treatment, which is performed to disrupt plant tissues contained in the tomato juice, can be conducted by using pectinase, pectriase, cellulase, hemicellulase, protease, amylase, lipase or the like at around the optimum pH value and optimum temperature of the enzyme selected. For example, the enzymatic treatment can be conducted by a pectinase treatment which comprises using a marketed pectinase preparation, adding the pectinase to the tomato juice, and then maintaining the same at an appropriate temperature and pH for a definite period of time. Pectinase preparations are generally produced by culturing microorganisms. Enzymes having been isolated and purified from the liquid culture media are marketed as enzyme preparations. As an example of the microorganism to be used in the culture, *Aspergillus niger* may be cited. It is also possible to treat with cellulase or the like at the same time. By the pectinase treatment, fibrous matters in the tomato juice are digested. The filtration following the enzymatic treatment as described above can be carried out by a method that is well known by a person skilled in the art, for example, kieselguhr filtration, membrane filtration or the like.

Now, an example of the process for producing the clear tomato juice will be illustrated: dilution of tomato juice => enzymatic treatment (pectinase) => kieselguhr filtration => concentration => sterilization => filling. By referring to the contents of the present description, a person skilled in the art can make appropriate modifications to this process.

The tomato juice-containing alcoholic drink contains (A) a lactic-fermented tomato liquid and (B) a clear tomato juice, each described above, at a weight ratio (A):(B)=1:50 to 50:1 (reference), alternatively 1:10 to 10:1 (reference), or according to the invention (A):(B) is 1:3 to 3:1, preferably 1:2 to 2:1 and particularly 1:1, in the state of being reconstituted to give the same sugar content. In the case where the lactic-fermented tomato liquid (A) is used in a large amount, the obtained drink tends to show a weak fresh tomato smell and a strong umami. In the case where the clear tomato juice (B) is used in a large amount, the obtained drink tends to show a strong fresh tomato smell and a weak umami. In determining the contents of lactic-fermented tomato liquid (A) and the clear tomato juice (B) in the drink, the sugar content of each component should be taken into consideration. "In the state of being reconstituted to give the same sugar content" as used herein means the content of each raw material is converted into the amount at which a definite sugar content can be obtained, particularly in the case of using a concentrated material. By referring, for example, techniques as will be described in Examples hereinafter, in particular, those indicated in Tables 3-2 and 5-2, the amounts of the above-described materials (A) and (B) are converted respectively into the amounts at which the standard sugar content of 4% in Brix degree (Bx.4) as specified in Japan Agricultural Standards (JAS) is obtained. Thus, the blending ratio can be determined. Excess and deficiency should be avoided by controlling the water content.

From the viewpoint of fully expressing the flavor characteristics of tomato; the tomato juice content of the tomato juice-containing alcoholic drink according to the present invention is 1 %(w/w) or more, preferably 10 %(w/w), more preferably 30 %(w/w) or more and still more preferably 50 %(w/w) or more. In the present description, tomato juice content is calculated by converting into the amount at which the above-described standard sugar content of 4% in Brix degree (Bx.4) as specified in JAS is obtained. In the case of using a concentrated tomato juice (including a concentrated clear tomato juice), for example, the tomato juice content of a drink containing 10 %(w/w) of the concentrated tomato juice with Bx.20 corresponds to 50 %(w/w).

"Tomato juice-containing alcoholic drink" as used herein means a drink which contains tomato juice and ethanol. From the viewpoint of the color stabilization, it is desirable that the turbidity of the tomato juice contained therein is preferably 10,000 Helm or less, more preferably 1,000 Helm or less and still more preferably 200 Helm or less. To obtain a tomato juice having such a turbidity, the amount of the above-described clear tomato juice in the tomato juice contained in the tomato juice-containing alcoholic drink
can be appropriately specified. For example, the amount of the clear tomato juice as described above in the tomato juice is preferably 50% or more, more preferably 75% or more, still more preferably 90% or more and particularly preferably 95% or more. Although the alcoholic drink may be an arbitrary one without restriction so long as being approvable under Japanese Liquor Tax Act, those falling within the category of sweet fruit wines are preferred from the viewpoints of expressing the tomato flavor characteristics and microbial control.

In one embodiment of the present invention, a tomato juice-containing alcoholic drink can be produced by a production method which involves a step of mixing the lactic-fermented tomato liquid and the clear tomato juice each obtained by the above methods with an alcohol, optionally followed, if desired, by a step of adding stabilized lycopene. Moreover, the tomato juice-containing alcoholic drink may contain appropriate additive(s) such as an antioxidant, saccharides, a souring agent, a dye, a fragrance, a spice and so on, if desired.

Now, an example of the process for producing the tomato juice-containing alcoholic drink will be illustrated: blending alcohol (alcohol content 12%), saccharides, souring agent and water => further blending alcohol (alcohol content 60%, containing fragrance and spice), lactic-fermented tomato liquid, clear tomato juice and antioxidant => further adding dye => strainer-filtration => bottling => heat sterilization => cooling. One of the characteristics of the present invention resides in that, from the viewpoint that the filtration would affect the flavor qualities of the drink, a method of producing a drink wherein the number of filtration operations is lessened can be provided.

Excluding special cases, "alcohol" as used herein means potable alcohol and includes pure alcohol, a drinkable solution containing alcohol and an alcohol-containing solution that is usable in manufacturing foods. Alcohol content is expressed in the amount (volume/volume) of pure alcohol contained per 100 ml of solution.

The alcohol is not restricted in kind, production method, raw material and so on. That is, use can be made of either one potable alcohol or a combination of two or more thereof selected from among, for example, spirits for liquor production (neutral spirit produced from molasses, grain spirit produced from cereals etc.), distilled alcoholic drinks (*shochu,* whisky, brandy, gin etc.), brewed alcoholic drinks (*sake,* fruit wine etc.), sparkling alcoholic drinks, blended liquors (synthetic *sake,* sweet fruit sine, liquor etc.) and so on. From the viewpoints of microbial control, flavor and so on, a fruit wine, in particular, white wine can be used as the whole amount or a portion of the alcohol. In one embodiment of the present invention, white wine and neutral spirit, either alone or a combination thereof, are used as the alcohol. Thus, it is possible to obtain a tomato juice-containing alcoholic drink which is particularly preferable from the viewpoints of microbial control, flavor and so on. In the case of using white wine, the mildness characteristic to wine well harmonizes with the umami of tomato and, furthermore, sulfurous acid contained in the sweet fruit wine thus obtained enables the production of a drink (in particular, a packaged drink) with a higher stability from the viewpoint of microbial control.

From the viewpoints of flavor, stability, microbial control and so on, the alcohol content of the tomato juice-containing alcoholic drink is 1 to 25%, preferably 4 to 18% and more preferably 8 to 14%. The flavor characteristics of tomato become less noticeable at a higher alcohol content, while microorganisms are liable to grow well at a lower alcohol content.

The saccharides as described above may be arbitrary ones without restriction so long as being usable in the field of manufacturing foods and drinks. That is, use can be made of either one saccharide or a combination of two or more thereof selected from among, for example, sucrose, fructose, glucose, high fructose corn syrup and so on. From the viewpoint of expressing the flavor characteristics of tomato, it is possible to mainly use isomerized sugars (glucose : fructose=1:1). The saccharide content should be appropriately controlled by considering changes in tomato sugar content depending on the variety, harvest time, etc. of the tomatoes employed as the raw material.

In one embodiment, the tomato juice-containing alcoholic drink has a sugar content of 0 to 30%, preferably 3 to 20% and more preferably 10 to 14%. Sugar content can be measured by using methods that are well known by a person skilled in the art. When the sugar content is too low, a watery taste becomes noticeable. When the sugar content is too high, on the other hand, the freshness of tomato is impaired.

As the souring agent as described above, use can be made of, for example, citric acid, malic acid, phosphoric acid or the like. The content of the sourcing agent should be appropriately controlled by considering changes in the acidity of the tomato juice depending on the variety of the tomatoes employed as the raw material. In one embodiment, the
tomato juice-containing alcoholic drink has an acidity, in terms of citric acid, of 0 to 2.5%, preferably 0.2 to 2.0% and more preferably 0.7 to 1.1%. Acidity can be measured by using methods that are well known by a person skilled in the art. The acidity should be controlled under examining the balance with the sugar content. When the acidity is too low compared with the sugar content, a strong sweetness becomes noticeable and the freshness of tomato is impaired. When the sourness is too strong, the resultant tomato drink becomes excessively sour and scarcely shows the umami or mildness of tomato.

In one embodiment, the tomato juice-containing alcoholic drink has a pH of 2.5 to 5.0, preferably pH 3.0 to 4.2 and more preferably pH 3.5 to 3.8. Since the pH value of tomato juice can be hardly lowered, attention should be paid to microbial control.

If desired, the tomato juice-containing alcoholic drink may contain a dye. From the viewpoint of acquiring an appearance matching the flavor of the drink, it is desirable to use lycopene which is a dye originating in tomato. However, lycopene is highly unstable in solution. Thus, it is known that when tomato juice or tomato paste containing lycopene is added as such to a drink or lycopene (natural lycopene) simply isolated and purified therefrom is added to a drink, there arise problems such as the formation of red sediments, fading, the neck ring phenomenon and so on. Accordingly, it is preferable that the lycopene to be added in the tomato juice-containing alcoholic drink
is lycopene which has an improved stability in solution.

"Stabilized lycopene" as used herein means lycopene having a higher stability with time passage in the drink than natural lycopene, that is, lycopene which shows little color change with time passage and sustains a high dispersion stability with time passage. As an example of such stabilized lycopene, a crystal-dispersion type lycopene preparation, the stability of which in solution has been improved by finely grinding crystals, adding a dispersant and homogenizing as disclosed in Patent Document 6, may be cited. Examples of available stable lycopene products include those marketed by San-Ei Gen FFI, Inc., Inabata Koryo Co., Ltd. and LYCORED Ltd. (Israel). In a preferred embodiment, the tomato juice-containing alcoholic drink
contains lycopene (natural lycopene) other than the stabilized lycopene as described above only in an amount smaller than the sedimentation level. Thus, as will be described in Examples hereinafter, no sedimentation occurs after allowing the drink to stand at 50°C for 14 days. The content of lycopene and stabilized lycopene may be determined based on the desired color of the drink by referring to, e.g., Examples hereinafter. In one embodiment, the content thereof is 0.01 %(w/w) or more, preferably 0.05 %(w/w) or more and more preferably 0.15 %(w/w) or more in terms of lycopene.

The antioxidant as described above may be arbitrary ones without restriction so long as being usable in the field of manufacturing foods and drinks. That is, use can be made of either one antioxidant or a combination of two or more thereof selected from among, for example, vitamin C, a nitrate and the like. Addition of the antioxidant also contributes to the improvement in the stability of lycopene. From the viewpoint of improving the stability of lycopene, it is possible to add, for example, 200 mg/L or more of vitamin C or about 200 to about 250 mg/L of a sulfite in terms of the total sulfuric acid concentration.

The container in which the tomato juice-containing alcoholic drink
is packed is not particularly restricted. Namely, use can be made of containers in various forms such as a bottle, a can, a paper container, a polyethylene terephthalate (PET) bottle and so on. Since color change and sedimentation are regulated in the tomato juice-containing alcoholic drink, no problem arises in producing a bottled drink.

### ADVANTAGES OF THE INVENTION

According to the present invention, it is possible to provide a tomato juice-containing alcoholic drink, which fully sustains the fresh tomato flavor immediately after biting into a tomato but is free from the undesirable grassy smell inherent to tomato juice, and shows well-balanced alcoholic image and umami of tomato together with well-balanced sourness and sweetness. Further, the present invention can provide the above-described drink with a high commercial value which sustains the vivid red color of tomato even in the presence of alcohol and is free from sedimentation even in the case of adding a tomato juice in a large amount and in which the growth of microorganisms is regulated. According to the method of the present invention, the preferable flavor can be exclusively taken out from tomato and utilized while cutting waste. At the same time, the compositions of drinks having various flavors can be quickly designed. Since the raw tomatoes employed as the starting material are once separated and purified followed by re-blending, the method according to the present invention has another merit, that is, interlot variations in raw tomato quality can be easily reduced and the product qualities can be easily stabilized.

### Examples

Next, the present invention will be described in greater detail by referring to the following Examples. However, it should be understood that the invention is never restricted thereto.
Examples not fulfilling the requirements of claim 1 are given for reference only.

### Example 1: Color tone and sedimentation stability of tomato juice-containing alcoholic drink (Reference)

### (1-A) Method of producing tomato juice-containing alcoholic drink

In accordance with the composition shown in Table 1, the individual raw materials were blended and dissolved. Then, the mixture was filled in bottles and air-tightly sealed. Next, the bottles were sterilized by heating in a water bath at 65°C for 10 minutes to give a drink.

The neutral spirit employed was one that was obtained from molasses and had an alcohol content of 95%.

The concentrated tomato paste was prepared by heating and pressing tomato fruits, removing seeds and skin and concentrating the tomato pulp thus obtained. In the present experiment, a frozen concentrated tomato paste Bx.37 (marketed by Campbell Japan, sugar content 37%, pH 4.4) was employed.

The clear tomato juice was one prepared by centrifuging a tomato paste, removing solid matters therefrom, enzymatically treating the resultant tomato juice with pectinase and then subjecting to kieselguhr filtration to thereby completely remove lees (sediment). In the present experiment, a concentrated tomato juice NO.17100 manufactured by San-Ei Gen FFI, Inc.(marketed by San-Ei Gen FFI, Inc., sugar content 60% in sugar content, acidity 4.6% in terms of citric acid, pH 4.1, turbidity 124 Helm) was employed.

The stabilized lycopene was a preparation which was prepared by extracting and purifying lycopene from tomatoes and then dispersing the crystals. In the present experiment, a tomato lycopene preparation manufactured by San-Ei Gen FFI, Inc. was employed.

Sugar content was measured by using a digital refractometer RX-3000α, manufactured by ATAGO Co., Ltd. Turbidity was measured by using Laboratory Turbidimeter Model KTL30-2 manufactured by SIGRIST. The contents of the concentrated tomato paste and clear tomato juice were determined so that the obtained drinks had the same sugar contents.

**[Table 1]**

| Raw material | Comparative Example 1 | Example 1 |
|---|---|---|
| Neutral spirit | 10 | 10 |
| Concentrated tomato paste(Bx.37) | 10.8 | |
| Clear tomato juice (concentrated) (Bx.60) | | 6.7 |
| Stabilized lycopene | | 0.2 |
| Water | 79.2 | 83.1 |
| Total | 100 | 100 |

| | | |
|---|---|---|
| (expressed in g) | | |

### (1-B) Color and sedimentation stability test

Each tomato juice-containing alcoholic drink produced in the above (1-A) was allowed to stand at 50°C for 14 days and then the appearance was observed. As Table 2 shows, the sample of Comparative Example 1 turned into gray with a lowering in the vivid red color and sediments were formed at the bottom of the container. In contrast, the sample of Example 1 sustained the vivid red color with no sedimentation.

**[Table 2]**

| Raw material | Comparative Example 1 | Example 1 |
|---|---|---|
| Color | Dark red | Vivid red |
| Sedimentation (lees) | ++ | - |

### Example 2: Improvement in flavor qualities by combining lactic-fermented tomato liquid with clear tomato juice

Although the grassy and immature smell of tomato can be reduced by lactic acid-fermenting tomato juice, the lactic-fermented tomato liquid thus obtained has less fresh smell of tomato. To achieve appropriate flavor qualities as a tomato juice-containing alcoholic drink, studies were made to improve the flavor qualities by combining such a lactic-fermented tomato liquid with a clear tomato juice.

### (2-A) Method of producing tomato juice-containing alcoholic drink

In accordance with the composition shown in Table 3-1, the individual raw materials were blended and dissolved. Then, the mixture was filled in bottles and air-tightly sealed. Next, the bottles were sterilized by heating in a water bath at 65°C for 10 minutes to give a drink.

The lactic-fermented tomato liquid was obtained by removing solid matters from a tomato paste by centrifuging, adding a fermentation promoter to the tomato juice thus obtained, fermenting the same by using a lactic acid bacterium and then further centrifuging. In the present experiment, a lactic-fermented tomato liquid Bx.20 (manufactured by TAIYO Co., sugar content 20%, acidity 11% in terms of citric acid, pH 4.2) was employed. Other materials were the same as those in Example 1. The contents of the clear tomato juice and lactic-fermented tomato liquid were determined so that the obtained drinks had the same sugar contents.

**[Table 3-1]**

| Material | Comparative Example 2 | Example 2-1 | Example 2-2 | Example 2-3 |
|---|---|---|---|---|
| Neutral spirit | 10 | 10 | 10 | 10 |
| Clear tomato juice (concentrated)(Bx.60) | 6.7 | 5 | 3.3 | 1.7 |
| Lactic-fermented tomato liquid (Bx.20) | | 5 | 10 | 15 |
| Stabilized lycopene | 0.2 | 0.2 | 0.2 | 0.2 |
| Water | 83.1 | 79.8 | 76.5 | 73.1 |
| Total | 100 | 100 | 100 | 100 |

| | | | | |
|---|---|---|---|---|
| expressed in g | | | | |

**[Table 3-2]**

| Composition converted as Bx.4 | | | | |
|---|---|---|---|---|
| Raw material | Comparative Example 2 | Example 2-1 | Example 2-2 | Example 2-3 |
| Clear tomato juice (concentrated)(Bx.60) | 100 | 75 | 50 | 25 |
| Lactic-fermented tomato liquid (Bx.20) | | 25 | 50 | 75 |
| Total | 100 | 100 | 100 | 100 |

### (2-B) Evaluation of flavor of tomato juice-containing alcoholic drink

Each of the drinks produced in the above (2-A) was tasted by 4 skilled panelists. Thus, the taste and flavor were evaluated as follows.
Comparative Example 2: Freshness of tomato and grassy and immature smell were both noticeable.
Example 2-1: Immature smell was reduced compared with Comparative Example 2 while richness and umami were improved.
Example 2-2: Immature smell was weak and fresh smell became noticeable. Well-balanced. Example 2-3: Immature smell was weak but freshness was weak too. Umami was evident.

Further, the items listed in Table 4 were scored in 5 grades. In each item, "5" means strongly noticeable while "1" means little noticeable. Table 4 shows the means in the evaluation of the individual items.

**[Table 4]**

| Item of sensory evaluation | Comparative Example 2 | Example 2-1 | Example 2-2 | Example 2-3 |
|---|---|---|---|---|
| Grassy smell of tomato | 4 | 3.5 | 3 | 2 |
| Freshness of tomato | 4.5 | 4 | 3.5 | 3 |
| Richness of tomato taste | 2 | 4 | 3.5 | 3 |
| Umami of tomato | 2 | 4.5 | 4 | 3.5 |

### Example 3: Novel tomato juice-containing alcoholic drink

Based on the findings obtained in Examples 1 and 2, tomato juice-containing alcoholic drinks were produced and the characteristics thereof were evaluated.

### (3-A) Production of tomato juice-containing alcoholic drink

In accordance with the compositions shown in Table 5-1, the individual raw materials were blended and dissolved. Then, the mixture was filled in bottles and air-tightly sealed. Next, the bottles were sterilized by heating in a water bath at 65°C for 10 minutes to give a drink. As the individual materials, the same ones as in Examples 1 and 2 were used. The contents of the tomato paste, clear tomato juice and lactic-fermented tomato liquid were determined so that the obtained drinks had the composition ratios as listed in Table 2 when converted as the sugar content Bx.4.

**[Table 5-1]**

| Raw material | Comparative Example 3 | Example 3 |
|---|---|---|
| Neutral spirit | 10 | 10 |
| Concentrated tomato paste (Bx.37) | 10.8 | |
| Clear tomato juice (concentrated)(Bx.60) | | 3.3 |
| Lactic-fermented tomato liquid (Bx.20) | | 10 |
| Isomerized saccharide (Bx.75) | 10 | 10 |
| Souring agent | 0.6 | 0.6 |
| Tomato flavor | 0.3 | 0.3 |
| Stabilized lycopene | 0.2 | 0.2 |
| Water | 68.1 | 65.6 |
| Total | 100 | 100 |

| | | |
|---|---|---|
| expressed in g | | |

**[Table 5-2]**

| Composition converted as Bx.4 | | |
|---|---|---|
| Raw material | Comparative Example 3 | Example 3 |
| Concentrated tomato paste (Bx.37) | 100 | |
| Clear tomato juice (concentrated)(Bx.60) | | 50 |
| Lactic-fermented tomato liquid (Bx.20) | | 50 |
| Total | 100 | 100 |

| | | |
|---|---|---|
| expressed in g | | |

### (3-B) Evaluation of flavor of tomato juice-containing alcoholic drink

The drinks produced in the above (3-A) were tasted by 4 skilled panelists. Thus, the taste and flavor were evaluated as follows.
Comparative Example 3: Freshness of tomato was noticeable but grassy and immature smell was also noticeable. Richness and umami of tomato were both faint.
Example 3: Grassy and immature smell was reduced and richness and umami became highly noticeable. Appropriate freshness of tomato was also noticeable.

### (3-C) Color and sedimentation stability test

Each tomato juice-containing alcoholic drink produced in the above (1-A) was allowed to stand at 50°C for 14 days and then the appearance was observed. As Table 6 shows, the sample of Comparative Example 3 showed no vivid red color and sediments were formed at the bottom of the container and a transparent part (*uwasuki*) was observed at the upper part of the container. In contrast, the sample of Example 3 sustained the vivid red color with no sedimentation.

**[Table 6]**

| Raw material | Comparative Example 3 | Example 3 |
|---|---|---|
| Color | Dark red | Vivid red |
| Sedimentation (lees) | ++ | - |

### (3-D) General analytical data and organic acid analytical data of product

Each drink obtained in the above (3-A) was subjected to general analysis and organic acid analysis. Tables 7 and 8 summarize the data respectively. The organic acid analysis was conducted under the following conditions:
[instrument employed] Hewlett Packard 110 series liquid chromatograph, [column] BIO-RAD HPX-87H Ion Exclusion Column 300 mm × 7.8 mm, [solvent] 2.5 mmol/L sulfuric acid, [column temperature] 40°C, [flow rate] 0.6 ml/min, [wavelength] 0 min to 214 nm, 8.8 min to 230 nm, 11.0 min to 214 nm,[retention time] citric acid=7.75 min, tartaric acid=8.23 min, malic acid=9.38 min, succinic acid=11.90 min, lactic acid=12.54 min, fumaric acid=14.18 min

**[Table 7]**

| Analysis item | Comparative Example 3 | Example 3 |
|---|---|---|
| Alcohol (%v/v) | 12.4 | 12.5 |
| Specific gravity | 1.042 | 1.033 |
| Sugar content (%) | 17.4 | 16.8 |
| Acidity (citric acid) (%) | 0.90 | 0.91 |
| pH | 3.59 | 3.65 |

**[Table 81**

| Organic acid | Comparative Example 3 | Example 3 |
|---|---|---|
| Citric acid | 9.49 | 9.34 |
| Tartaric acid | 0.20 | 0.33 |
| Malic acid | 0.00 | 0.00 |
| Succinic acid | 1.85 | 3.42 |
| Lactic acid | 0.00 | 0.27 |
| Fumaric acid | 0.00 | 0.00 |

| | | |
|---|---|---|
| expressed in g/L | | |

## Claims

1. A method of preparing a tomato juice-containing alcoholic drink,
which contains
(A) a lactic-fermented tomato liquid and
(B) a clear tomato juice, and
has a tomato juice content of 1 %(w/w) or more and an alcohol content of 1 to 25% and wherein the method comprises mixing (A) the lactic-fermented tomato liquid and (B) the clear tomato juice, wherein the weight ratio is (A):(B)=1:3 to 3:1 in the state of being reconstituted to give the same sugar content, which means the content of each raw material (A) and (B) is converted into the amount at which a definite sugar content is obtained.

2. The method of preparing a tomato juice-containing alcoholic drink according to claim 1, further comprising a step of adding stabilized lycopene.

## Patentansprüche

1. Ein Verfahren zur Herstellung eines Tomatensaft enthaltenden alkoholischen Getränks, welches
(A) eine milchsauer fermentierte Tomatenflüssigkeit und
(B) einen klaren Tomatensaft enthält, und
einen Tomatensaftgehalt von 1 % (w/w) oder mehr und einen Alkoholgehalt von 1 bis 25 % aufweist und wobei das Verfahren das Mischen von (A) der milchsauer fermentierten Tomatenflüssigkeit und (B) des klaren Tomatensafts umfasst, wobei das Gewichtsverhältnis (A):(B) = 1:3 bis 3:1 im Zustand der Rekonstitution auf den selben Zuckergehalt beträgt, was bedeutet, dass der Gehalt jedes Rohmaterials (A) und (B) in die Menge umgewandelt wird, bei welcher ein bestimmter Zuckergehalt erhalten wird.

2. Das Verfahren zur Herstellung eines Tomatensaft enthaltenden alkoholischen Getränks gemäß Anspruch 1, ferner umfassend einen Schritt der Zugabe von stabilisiertem Lycopin.

## Revendications

1. Méthode de préparation d'une boisson alcoolisée contenant du jus de tomate, qui contient
(A) un liquide à base de tomate ayant subi une fermentation lactique et
(B) un jus de tomate pur, et
a une teneur en jus de tomate de 1 % (p/p) ou plus et une teneur en alcool de 1 à 25 % et dans laquelle la méthode comprend le mélange (A) du liquide à base de tomate ayant subi une fermentation lactique et (B) du jus de tomate pur, où le rapport en poids est (A):(B) = 1:3 à 3:1 à l'état reconstitué pour donner la même teneur en sucre, ce qui signifie que la teneur en chaque matière première (A) et (B) est convertie en quantité à laquelle une teneur en sucre définie est obtenue.

2. Méthode de préparation d'une boisson alcoolisée contenant du jus de tomate selon la revendication 1, comprenant en outre une étape d'ajout de lycopène stabilisé.
